(19) **Europäisches Patentamt**

**European Patent Office**

**Office européen des brevets**

(11) **EP 0 671 210 B1**

(12) **EUROPÄISCHE PATENTSCHRIFT**

(45) Veröffentlichungstag und Bekanntmachung des Hinweises auf die Patenterteilung:
**31.05.2000   Patentblatt 2000/22**

(51) Int Cl.[7]: **B01J 20/18**, C02F 1/28, C02F 1/52

(21) Anmeldenummer: **95103514.6**

(22) Anmeldetag: **10.03.1995**

(54) **Verfahren zur Herstellung und Verwendung eines festen Verbundproduktes zur Wasserbehandlung**

Process of manufacturing and using a composite product for water treatment

Procédé de préparation et d'utilisation d'un produit composite pour le traitement d'eau

(84) Benannte Vertragsstaaten:
**AT BE CH DE DK ES FR GB GR IE IT LI NL PT SE**

(30) Priorität: **11.03.1994   DE 4408302**

(43) Veröffentlichungstag der Anmeldung:
**13.09.1995   Patentblatt 1995/37**

(73) Patentinhaber: **Zeochem GmbH**
**77815 Brühl (DE)**

(72) Erfinder:
- **Heinzel, Günter**
  **D-80469 München (DE)**
- **Papp, Janos, Dr.**
  **H-1022 Budapest (HU)**
- **Schödder, Erika, geb. Schiffer**
  **D-82067 Ebenhausen (DE)**

(74) Vertreter:
**Haft, von Puttkamer, Berngruber, Czybulka**
**Patentanwälte**
**Franziskanerstrasse 38**
**81669 München (DE)**

(56) Entgegenhaltungen:
DE-A- 2 602 416          FR-A- 2 472 951
US-A- 4 542 118

- **PATENT ABSTRACTS OF JAPAN vol. 10 no. 321 (C-382) & JP-A-61 133140 (NIPPON SODA) 20.Juni 1986,**
- **DATABASE WPI Week 8301 Derwent Publications Ltd., London, GB; AN 83-00619K & JP-A-57 187 008 (NIPPON SOLID) , 17.November 1982**
- **DATABASE WPI Week 7410 Derwent Publications Ltd., London, GB; AN 74-18088V & JP-A-48 022 375 (TORAY IND) , 22.März 1973**

**Beschreibung**

Die Erfindung betrifft ein Verfahren zur Herstellung eines festen Verbundproduktes zur Wasserbehandlung auf der Basis von zeolithhaltigem Gesteinsmehl.

Es werden bei der Aufbereitung von Trinkwasser, wie auch bei der Abwasserreinigung verschiedene Behandlungsmittel, Chemikalien, Adsorbentien, Filter, Ionenaustauscher usw. eingesetzt, um den vorgeschriebenen Reinheitsgrad zu erreichen. Wegen der Vielzahl der möglichen Verunreinigungskomponenten im Wasser - Kationen wie Ammonium oder Schwermetalle, Anionen wie Phosphate, Sulphate, dann Kohlenwasserstoffe, Fette, Eiweiß und Kohlenhydrate etc. - muß man meistens mehrere Wasserbehandlungsmittel anwenden. Es ist schon auch deshalb eine vielseitige Aufgabe, das Wasser zu reinigen, weil die Verunreinigungen nach ihrer Qualität vielfältig sind und dazu noch diese Materialien in differenter Form und Abmessung vorliegen: so in Form von echter Lösung oder in kolloidaler Form, als Suspension, Dispersion oder Aerosile, weiterhin in ganz großen Abmessungen. Diese unerwünschten Verunreinigungskomponenten wurden durch Ionenaustausch, Fällung, Flockung, Filtern, Zentrifugieren, durch Oxidation oder Reduktion, Osmose, Elektrolyse usw. oder mit Hilfe von Mikroorganismen biologisch entfernt.

In den heutigen Wasseraufbereitungs- oder Wasserreinigungsverfahren werden mehrere, manchmal bis 10 Prozeßstufen benötigt, um die Qualitätsanforderungen zu erfüllen. Es ist ein Bestreben, in den neuen Technologien die Behandlungsschritte zu reduzieren, so daß der bei der Wasserreinigung zwangsweise entstehende Schlamm weniger wird und/oder als Rohstoff nützlich anwendbar sein soll. Es ist weiterhin ständig das Ziel der Entwicklungsarbeiten, immer effektivere Behandlungs- oder Hilfsmittel zu finden, um die Ökonomie der Wasserreinigungsverfahren zu verbessern, wobei in den letzten Jahren umweltfreundlichen Reinigungsmitteln und einer umweltfreundlichen Technologie wachsende Bedeutung beigemessen wird. Man muß sich nicht zuletzt vor Augen halten, daß die Wasserbehandlungsmittel genügend rein sein sollten, damit bei der Anwendung dieser, meistens Chemikalien - die ihre Aufgabe sonst gut erfüllen - nicht eine Redistribution mit unerwünschten Begleitkomponenten stattfindet. Zu der Wasserbehandlung werden überwiegend Eisen, Al-Verbindungen und Kalkprodukte als Fällungs- und Flockungsmittel verwendet, weiterhin zur Beschleunigung der Sedimentation des Schlammes und zur Erhöhung des Trockensubstanzgehaltes im Schlamm oder als Träger für Mikroorganismen verschiedene Gesteinsmehle zudosiert. Die oben erwähnten Stoffe werden entweder getrennt oder zusammengemischt als Komposition verwendet.

Aus JP-A-03-056 104 ist ein Mittel zur Abwasserbehandlung bekannt, das durch Zusatz von Polyaluminiumchlorid zu einem Material erhalten wird, das seinerseits durch Zusatz von Chlorwasserstoff zu einem zeolithhaltigen pulverförmigen Gestein erhalten wird. Dabei wird bei niedriger Temperatur gearbeitet. Es entsteht ein physikalisches Gemisch aus Polyaluminiumchlorid und dem Gestein, welches nach Zusatz zum Abwasser wieder in diese Ausgangsmaterialien zerfällt. Um ein Mittel zur Wasserreinigung herzustellen, werden nach JP-A-61 133 140 Polyaluminiumchlorid und Zeolith in wässriger Lösung gemischt.

Die Aufgabe der Erfindung besteht darin, ein Verfahren zur Herstellung eines Verbundproduktes anzugeben, das eine größere Effektivität hat, als getrennte Ausgangsmaterialien.

Diese Aufgabe wird durch ein Verfahren der eingangs genannten Art gelöst, das durch die in dem Kennzeichnen des Patentanspruches 1 angegebenen Merkmale gekennzeichnet ist.

Erfindugnsgemäß wird ein zeolithhaltiges Gesteinsmehl mit Polyaluminiumchlorid, das zum Teil hydrolysiert sein kann, in Verbindung gebracht und dadurch ein Verbundprodukt produziert. Dieses Produkt hat überraschender Weise eine viel höhere Effektivität als die Ausgangsmaterialien getrennt für sich. Außerdem sind folgende Vorteile bei der Anwendung des neuen Verbundproduktes gegenüber den üblichen Mischprodukten zu beobachten:

- es ist pH-neutral

- es ist nicht toxisch

- es ist einsetzbar bei Flotations- und Sedimentationsanlagen

- destabilisiert Suspensionen und Dispersionen und Emulsionen

- es ist praktisch anionenfrei (ausgenommen OH-Ionen)

- einsetzbar über einen weiteren pH-Bereich

- es können Kationen (insbesondere Schwermetalle) oder Anionen (z.B. $PO_4^{3-}$) entfernt werden.

- reduziert den chemischen Sauerstoffbedarf (CSB), biologischen Sauerstoffbedarf (BSB) und den Gehalt an adsorbierbaren organischen und halogenierten Kohlenwasserstoffen (AOX)

-     verringert den Schlammanfall und erhöht gleichzeitig den Trockensubstanzgehalt

-     es ist nicht quellend

-     wirtschaftlich, durch geringe Dosierung, und umweltfreundlich.

Es wird bei der Herstellung des multifunktionell wirkenden Verbundproduktes, von einem natürlichen, säurefesten, thermostabilen, zeolithhaltigen Gesteinsmehl ausgehend, im ersten Schritt durch Säurebehandlung ein Zwischenprodukt hergestellt, in dem der Zeolith zum Teil oder ganz in H-Form vorliegt. Diese Wasserstoff-Form läßt sich auch durch NH$_4$-Austausch und anschließende thermische Behandlung erhalten. Dieses Zwischenprodukt wird dann mit gegebenenfalls teilweise hydrolysiertem Polyaluminiumchlorid homogen vermischt und bei hoher Temperatur zur Reaktion gebracht. Durch diese exogene Behandlung spielt sich eine chemische Reaktion ab und das gegebenenfalls teilhydrolysierte Polyaluminiumchlorid wird zum Teil chemisobiert und zum Teil physisorbiert, je nach Mengenverhältnis. Dadurch entsteht ein völlig neues, hochaktives Verbundprodukt mit einer neuartigen chemischen und physikalischen Wirkung in dem Fällungs- und Flockungsprozeß bei der Abwasserbehandlung und auch in der Schlammkonditionierung. Zu der Herstellung des Verbundproduktes benutzt man ein Gesteinsmehl, das einen Zeolithgehalt zwischen 40 und 95 Gew.-% aufweist.

Die Zeolithkomponenten des Gesteinsmehles müssen säure- und thermostabil sein, d.h. das Si/Al-Verhältnis muß über 3 liegen. Die Korngröße des Gesteinsmehles beträgt bei dem Pulverprodukt zwischen 1 bis 250 µm, und bei dem Granulatverbundprodukt 0,25 bis 100 mm. Die thermische Behandlung erfolgt zwischen 100 bis 600 °C, vorzugsweise bei etwa 300 °C. Die zwei Ausgangskomponenten, das zeolithhaltige Gesteinsmehl und das gegebenenfalls teilhydrolysierte Polyaluminiumchlorid wird ein einem Gewichtsverhältnis von 1 : 0,01 bis 1:2 angewendet, vorzugsweise liegt das Verhältnis bis 1 : 1.

Die Erfindung betrifft ein Verfahren zum Herstellen eines festen, zeolithhaltigen, unlöslichen und umweltfreundlichen Wasserbehandlungsmittels mit multifunktioneller Wirkung in der Wasser- und Schlammbehandlung. Das Verfahren ist dadurch gekennzeichnet, daß das saurer reagierende, gegebenenfalls teilhydrolysierte Polyoxyaluminiumchlorid mit natürlichem zeolithhaltigen Gesteinsmehl zur Reaktion gebracht wird. Die Zeolithe müssen säureresistent und thermostabil sein, weil die exogene chemische Behandlung zwischen 100 und 600 °C erfolgt. Der Zeolith muß ganz oder zum Teil in H-Form vorliegen, um zu einen Verbundprodukt zu kommen. Das Verbundprodukt besitzt eine viel höhere Effektivität als dieselbe Menge der Ausgangskomponenten zusammen. Die Erfindung bezieht sich ferner auf die Verwendung des nach dem Verfahren hergestellten Verbundproduktes zur Behandlung von Abwässern kommunaler oder industrieller Herkunft und zur Schlammbehandlung, weiterhin zur Trinkwasseraufbereitung.

Das erfindungsgemäße Wasserbehandlungsmittel wird nach einer bevorzugten Ausführungsform der Erfindung erhalten, in dem ein Gemisch aus zumindest teilweise protonisierten Zeolith, Polyaluminiumchlorid und Wasser bei einer Temperatur zwischen 150 und 250 °C unter Verdampfung des Wassers umgesetzt wird, wobei die Temperatur so gesteuert wird, daß das so gebildete feste Verbundprodukt auf nicht mehr als 100 °C erwärmt wird, wenn es eine Feuchtigkeit von weniger als 10, vorzugsweise weniger als 5 Gew.-% erreicht hat.

Wie aus der nachstehenden Gleichung (I) ersichtlich, werden bei der Herstellung des erfindungsgemäßen Wasserbehandlungsmittels die Hydroxylgruppen (OH) der protonisierten Zeolithstruktur (Z) mit den OH-Gruppen des teilweise hydrolysierten Polyaluminiumchlorids zu einer Verbindung $(Z\text{-}O)_n Al_n (OH)_{n\text{-}m} (Cl)_m$, worin m > 0 ist, umgesetzt.

$$Z-OH + HO \quad \substack{\diagdown \\ Al\text{-}OH \\ \diagup}$$
$$Z-OH + HO \quad \substack{\diagdown \\ Al\text{-}Cl \\ \diagup}$$
$$Z-OH + HO \quad \substack{\diagdown \\ Al\text{-}OH \\ \diagup} \qquad \xrightarrow[\Delta T]{\text{Dehydroxylisation}}$$
$$Z-OH + HO \quad \substack{\diagdown \\ Al\text{-}Cl \\ \diagup}$$
$$Z-OH - HO \quad \substack{\diagdown \\ Al\text{-}OH}$$

$$Z-O \quad \substack{\diagdown \\ Al\text{-}OH \\ \diagup}$$
$$Z-O \quad \substack{\diagdown \\ Al\text{-}Cl \\ \diagup}$$
$$Z-O \quad \substack{\diagdown \\ Al\text{-}OH \\ \diagup} \quad + \; H_2O \qquad (I)$$
$$Z-O \quad \substack{\diagdown \\ Al\text{-}Cl \\ \diagup}$$
$$Z-O$$

Im Falle von Klinoptilolith wird der protonische Zeolith durch die Formel $H_n (Na)_{6-n} [Al_6 Si_{30} O_{72}]$ mit $n > 1$ wiedergegeben.

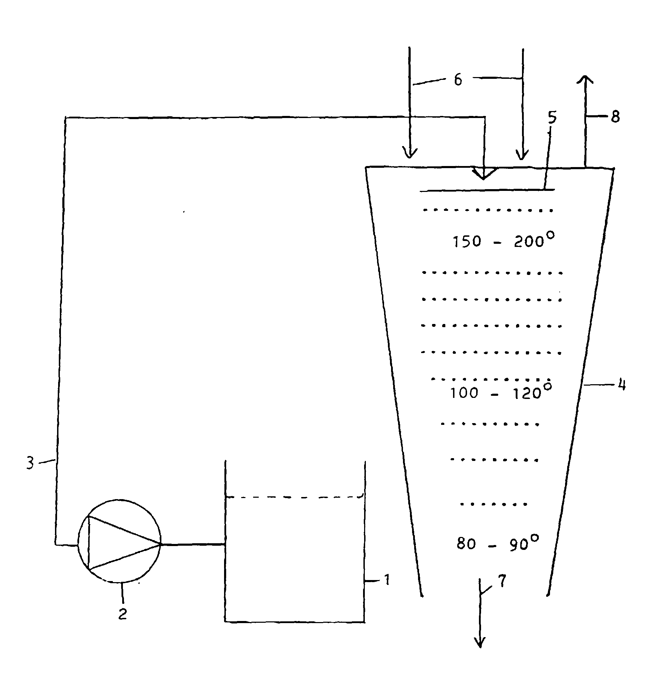

Die Umsetzung wird vorzugsweise in einem Sprühturm durchgeführt, wie in der beigefügten Figur veranschaulicht, die ein Fließdiagramm zur Herstellung des erfindungsgemäßen Verbundproduktes zeigt.

Danach wird ein zeolithhaltiges Gesteinsmehl mit einer beispielsweise 30 bis 70 gew.-prozentigen wässrigen Polyaluminiumchloridlösung in einem Behälter 1 vermischt und mit Salzsäure auf einen pH-Wert von mindestens 1,5 angesäuert. Das Gemisch wird mit einer Pumpe 2 über eine Leitung 3 von oben einem Sprühturm 4 zugeführt, der eine Höhe von beispielsweise 10 bis 30 m aufweist. Zum Zersprühen wird das Gemisch auf eine rotierende Verteilerscheibe 5 aufgebracht. Die Komponenten können auch getrennt zugegeben werden.

Im Gleichstrom, also von oben nach unten, wird dem Sprühturm 4, wie durch die Pfeile 6 veranschaulicht, Heißluft zugeführt. Die Temperatur der Luft 6 beträgt maximal 250 °C, vorzugsweise maximal 200 °C. Bei einer höheren Temperatur besteht die Gefahr, daß das Polyaluminiumchlorid unter Abspaltung von Chlorwasserstoffsäure zu Aluminiumhydroxyd oder Aluminiumoxyd zersetzt wird, bevor es mit dem Zeolith nach der Gleichung (I) in Reaktion tritt.

Das durch die Reaktionsgleichung (I) gebildete Verbundprodukt tritt aus dem Turm 4 unten in fester Form aus, wie durch den Pfeil 7 veranschaulicht. Während des Durchtritts verdampft das Wasser (Pfeil 8) des Gemisch. Dadurch nimmt die Temperatur der Luft 6 zunehmend ab. Das heißt, das feste Verbundprodukt 7, das aus dem Turm 4 unten austritt, wird einer Temperatur von weniger als 100 °C, vorzugsweise weniger als 90 °C, ausgesetzt.

Das feste Produkt 7 neigt nämlich bei einer höheren Temperatur dazu, sich unter Chlorwasserstoffabspaltung zu zersetzen.

Das aus dem Turm 4 austretende, feste Verbundprodukt 7 weist einen Wassergehalt von höchstens 10 Gew.-%, vorzugsweise höchstens 5 Gew.-%, auf.

Die mittlere Verweilzeit des Gemischs im Turm 4 beträgt vorzugsweise 2 bis 10 Minuten.

Wie erwähnt, wird das Polyaluminiumchlorid als 30 bis 70 gew.-prozentige wässrige Lösung zugesetzt. Es ist daher davon auszugehen, daß zumindest ein Teil des Polyaluminiumchlorids in teilhydrolysierter Form vorliegt, also die Formel $Al_n (OH)_m Cl_{3n-m}$ mit $m = 0$ bis $< 3$ aufweist.

Das so hergestellte erfindungsgemäße Wasserbehandlungsmittel besitzt mehrere Funktionen. Durch die anionischen Baustoffgruppen des Zeolith weist es eine Ionenaustauschfunktion auf, beispielsweise um Kationen, insbesondere Schwermetallkationen durch Ionenaustausch aufzunehmen. Da der Zeolith in zumindest teilweise protonisierter Form vorliegt, kann er mit protonenempfindlichen Produkten reagieren, beispielsweise um Farben mit leichtprotonisierbaren Gruppen, wie Doppelbindungen, zu entfärben. Andererseits können die Aluminiumchlorid-Gruppen des Produktes unter Abspaltung von Chlor-Anionen kationische Gruppen bilden. Durch diese Kationizität des erfindungsgemäßen Verbundproduktes können beispielsweise Phosphat-Anionen aus dem Abwasser entfernt werden. Durch Einsatz eines mehr oder weniger protonisierten Zeolith sowie durch ein mehr oder weniger großes Gewichtsverhältnis des Polyaluminiumchlorids zum Gesteinsmehl können diese drei Funktionen gezielt mehr oder weniger stark ausgeprägt werden.

Nach einer weiteren bevorzugten Ausführungsform der Erfindung wird ein Gemisch aus mindestens teilweise protonisiertem Zeolith, Polyaluminiumchlorid und Wasser bei einer Temperatur von weniger als 100 °C, vorzugsweise im Vakuum, getrocknet und dann auf 250 bis 600 °C erhitzt. Dieses Produkt wird vorzugsweise als Granulat hergestellt. Dabei wird auf der Oberfläche der Körner des Granulats eine festhaftende Schicht aus Aluminiumhydroxyd oder -oxyd gebildet.

Die mehr oder weniger belasteten Abwässer aus den verschiedenen Industrie- und Kommunalbereichen sind unterschiedlichster Art mit vielfältigen Inhaltsstoffen.

So schwach die Dosierung des Produktes von 0,1 g - 10 g/l Abwasser, je nach Aufgabenstellung und zu erzielenden Reinheitsgrad, ob anorganische oder organische Parameter maßgebend sind.

Im Mittel zeigte sich, daß überwiegend eine Dosierung von 0,2 - 0,5 Gramm pro Liter ausreichend sind.

Durch das erfindungsgemäße Verfahren erzielt man im Vergleich zu den bekannten Verfahren bedeutend höhere Schmutz-Eliminierungsraten und/oder geringeren Produktverbrauch.

Aufgrund der bekannten Kapillarstruktur des Zeolith, erfolgt eine sehr schnelle Entwässerung des Schlammes durch Schwerkraft, Zentrifuge, Filterpresse u.a.

Die nachstehenden Beispiele dienen der weiteren Erläuterung der Erfindung.


Beispiel 1


Zeolithhaltiges Gestein mit ca. 60 Gew.-% Klinoptilotit mit einer Korngröße von höchstens 250 μm wird im Gewichtsverhältnis von ca. 1:1 mit einer ca. 50%igen wässrigen Polyaluminiumchloridlösung vermischt. Anschließend wird Salzsäure zugegeben, bis der pH-Wert weniger als 1,5 beträgt. Das Gemisch wird einem Sprühturm mit einer Höhe von ca. 20 m zugeführt und mit einer schnellrotierenden Verteilerscheibe zerstäubt. Im Gleichstrom mit dem Gemisch wird in den Turm von oben Luft mit einer Temperatur von 150 bis 250 °C eingeblasen. Das aus dem Turm austretende feste Verbundprodukt weist eine Temperatur von 80 bis 90 °C auf. Der Wassergehalt des Produkts beträgt ca. 2 bis 5 Gew.-%.

Die Wirksamkeit des erfindungsgemäßen Verfahrens soll durch die folgenden Beispiele 2 und 3 erläutert werden.


Beispiel 2


Das für die Versuche benutzte Abwasser stammt aus einer optischen Fabrik mit hohem CSB- und KW-Wert, sowie Schwermetallionen, die zum Beispiel als Zink- und Nickel-Komplex vorlagen.

Im Vergleich zu dem erfindungsgemäßen Verbundprodukt nach dem Beispiel 1 wurden folgende Produkte getestet:

A) $Al_2 (SO_4)_3$ Aluminiumsulfate

B) Zeolith + $Al_2 (SO_4)_3$ gemischt 1:1

C) Zeolith + PAC gemischt 1:1 (PAC = Polyaluminiumchlorid)

D) Verbundprodunkt nach Beispiel 1

Die pH-Wert Einstellung nach der Reaktion bzw. Mikroflockung erfolgte mit 10 Gew.%iger Kalkmilch Ca $(OH)_2$. Zur Erzielung einer Makroflocke wurde ein synthetisches anionisches Polymer auf Basis Polyacrylamid (0,1 %ige Lösung) genommen.

Die Analytik wurde nach DIN durchgeführt; die Messungen der Schwermetallionen erfolgten durch Atomadsorptionsspektrometril.

Schmutzwasser im Becherglas mit jeweils 250 ml Volumen wird bei einer Wassertemperatur von 18 - 20 °C 10 Minuten nach Produktzugabe am FLOCC-TEST-Gerät mit 500 Upm gerührt.

Die ausgefällten Niederschläge wurden durch Filtrierung über ein Papierfilter abgetrennt. Die Filtriergeschwindigkeit wurde gemessen.

Die Zugabemenge der Reagenzien A - D war jeweils 1 Gramm pro Liter. Der pH-Wert wurde auf 8 eingestellt mit Ca $(OH)_2$.

Die Ergebnisse sind in der Tabelle I wiedergegeben.

Tabelle I

| | Grenzwerte mg/l | unbehandelt | A | B | C | D |
|---|---|---|---|---|---|---|
| CSB | - | 12.800,0 | 4.740,0 | 4.200,0 | 4.100,0 | 1.800,0 |
| KW | 10,0 | 1.470,0 | 40,0 | 25,0 | 18,0 | 6,0 |
| ZINK | 2,0 | 12,8 | 10,4 | 8,3 | 6,5 | 1,4 |
| BLEI | 0,5 | 3,0 | 2,4 | 1,2 | 0,6 | < 0,5 |
| NICKEL | 0,5 | 2,4 | 1,6 | 0,9 | 0,4 | < 0,1 |
| KUPFER | 0,5 | 1,2 | 1,1 | 0,6 | 0,4 | < 0,1 |
| FILTRIERGESCHWINDIGKEIT | - | 1h 45' | 48' | 28' | 17' | 3' |

Beispiel 3

Es wurde Abwasser aus einem kombinierten Entfettungs/Phosphatierungsbades aus der Metallvorbehandlungsanlage verwendet.

Die Versuchsanordnung und die Messungen entsprachen dem Beispiel 2.

Aufgrund der Vorversuche wurden von den Produkten A - D 5 Gramm pro Liter dosiert.

Die Ergebnisse sind in in der Tabelle II wiedergegeben.

Tabelle II

| | Grenzwerte mg/l | unbehandelt | A | B | C | D |
|---|---|---|---|---|---|---|
| CSB | - | 48.000,0 | 22.300,0 | 18.100,0 | 14.400,0 | 8.450,0 |
| KW | 10,0 | 2.400,0 | 90,0 | 785,0 | 38,0 | 9,0 |
| $P_2O_5$ | 20,0 | 1.300,0 | 210,0 | 93,0 | 48,0 | 6,8 |
| Fe | 3,0 | 60,0 | 44,0 | 18,0 | 8,0 | 1,4 |
| FILTRIERGESCHWINDIGKEIT | - | - | 1h5' | 47' | 38' | 18' |

**Patentansprüche**

1. Verfahren zur Herstellung eines festen Verbundproduktes zur Wasserbehandlung auf der Basis von zeolithhaltigem Gesteinsmehl, dadurch gekennzeichnet, daß das Gesteinsmehl mit Polyaluminiumchlorid, das teilweise hydrolysiert sein kann, bei einer Temperatur zwischen 100° C und 600° C umgesetzt wird.

2. Verfahren nach Anspruch 1, dadurch gekennzeichnet, daß das Si/Al-Verhältnis des Zeoliths mehr als 3 beträgt.

3. Verfahren nach Anspruch 1, dadurch gekennzeichnet, daß die Zeolithkomponente im Gestein eine Klinoptilolith-Struktur besitzt.

4. Verfahren nach Anspruch 1, dadurch gekennzeichnet, daß der Zeolithgehalt des Gesteins 40 bis 95 Gew.-% beträgt.

5. Verfahren nach Anspruch 1, dadurch gekennzeichnet, daß das Gesteinsmehl und das gegebenenfalls teilweise hydrolysierte Polyaluminiumchlorid in einem Gewichtsverhältnis von 1:0,01 bis 1:2 vorzugsweise von ca. 1:1 eingesetzt werden.

6. Verfahren nach einem der vorstehenden Ansprüche, dadurch gekennzeichnet, daß der Zeolith vor Umsetzung mit dem gegebenenfalls teilweise hydrolysierten Polyaluminiumchlorid zumindest teilweise in die protonisierte Form übergeführt wird.

7. Verfahren nach einem der vorstehenden Ansprüche, dadurch gekennzeichnet, daß das Gesteinsmehl als Pulver mit einer Teilchengröße von 250 um oder weniger eingesetzt wird.

8. Verfahren nach einem der Ansprüche 1 bis 6, dadurch gekennzeichnet, daß das Gesteinsmehl als Granulat mit einer Teilchengröße von 0,2 bis 100 mm eingesetzt wird.

9. Verfahren nach einem der Ansprüche 1 bis 6, <u>dadurch gekennzeichnet,</u> daß das Gesteinsmehl als Formkörper eingesetzt wird.

10. Verfahren nach einem der vorstehenden Ansprüche, <u>dadurch gekennzeichnet,</u> daß ein Gemisch aus zumindest teilweise protonisiertem Zeolith, gegebenenfalls teilweise hydrolysiertem Polyaluminiumchlorid und Wasser bei einer Temperatur zwischen 150 bis 250 °C unter Verdampfung des Wassers umgesetzt wird, wobei die Temperatur so gesteuert wird, daß das gebildete feste Verbundprodukt auf nicht mehr als 100 °C erwärmt wird.

11. Verfahren nach Anspruch 10, <u>dadurch gekennzeichnet,</u> daß das feste Verbundprodukt eine Feuchtigkeit von weniger als 10 Gew.-% aufweist.

12. Verfahren nach Anspruch 10 oder 11, <u>dadurch gekennzeichnet,</u> daß die Umsetzung in einem Sprühturm durchgeführt wird, dem der zumindest teilweise protonisierte Zeolith, das gegebenenfalls teilweise hydrolysierte Polyaluminiumchlorid und Wasser von oben zusammen mit einem Luftstrom mit einer Temperatur von 150 bis 250 °C zugeführt wird.

13. Verfahren nach einem der Ansprüche 1 bis 9, <u>dadurch gekennzeichnet,</u> daß ein Gemisch aus zumindest teilweise protonisiertem Zeolith, gegebenenfalls teilweise hydrolysiertem Polyaluminiumchlorid und Wasser bei einer Temperatur von weniger als 100 °C getrocknet und dann auf 250 bis 600 °C erhitzt wird.

14. Verfahren nach Anspruch 13, <u>dadurch gekennzeichnet,</u> daß das Trocknen im Vakuum erfolgt.

15. Verwendung des nach einem der vorstehenden Ansprüche hergestellten Verbundprodukts zur Behandlung von Abwässern industrieller und kommunaler Herkunft, zur Trinkwasseraufbereitung und zur Schlammbehandlung als Pulverprodukt, Granulat oder Formkörper.

**Claims**

1. A process for the manufacture of a solid composite product for the treatment of water based on powdered mineral that contains zeolite,
   **characterised in that** the powdered mineral is reacted at a temperature of between 100° C and 600° C with polyaluminium chloride, which can be partially hydrolysed.

2. A process according to Claim 1,
   **characterised in that** the Si/Al ratio of the zeolite is more than 3.

3. A process according to Claim 1,
   **characterised in that** the zeolite constituent in the mineral has a clinoptilolite structure.

4. A process according to Claim 1,
   **characterised in that** the zeolite content of the mineral is 40 to 95 % by weight.

5. A process according to Claim 1,
   **characterised in that** the powdered mineral and the possibly partially hydrolysed polyaluminium chloride is used in a weight ratio of 1 : 0.1 to 1 : 2, preferably of approx. 1 : 1.

6. A process according to one of the preceding Claims,
   **characterised in that** the zeolite, before reaction with the possibly partially hydrolysed polyaluminium chloride, is transferred at least partially into the protonised form.

7. A process according to one of the preceding Claims,
   **characterised in that** the powdered mineral is used as powder with a particle size of 250 µm or less.

8. A process according to one of Claims 1 to 6,
   **characterised in that** the powdered mineral is used as granulate with a particle size of 0.2 to 100 mm.

**9.** A process according to one of Claims 1 to 6,
**characterised in that** the powdered mineral is used as shaped solids.

**10.** A process according to one of the preceding Claims,
**characterised in that** a mixture consisting of at least partially protonised zeolite, possibly partially hydrolysed polyaluminium chloride and water is reacted at a temperature of between 150 to 250 °C accompanied by the evaporation of the water, the temperature being controlled so that the solid composite product that is formed is heated to no higher than 100°C.

**11.** A process according to Claim 10,
**characterised in that** the solid composite product has a moisture of less than 10 % by weight.

**12.** A process according to Claim 10 or 11,
**characterised in that** the reaction is performed in a spraying tower, to which the at least partially protonised zeolite, the possibly partially hydrolysed polyaluminium chloride and water is suppled from above together with an air stream with a temperature of 150 to 250°C.

**13.** A process according to one of Claims 1 to 9,
**characterised in that** a mixture consisting of at least partially protonised zeolite, possibly partially hydrolysed polyaluminium chloride and water is dried at a temperature of less than 100°C and is then heated to 250 to 600°C.

**14.** A process according to Claim 13,
**characterised in that** the drying takes place in a vacuum.

**15.** Use of the composite product manufactured in according with one of the preceding Claims for the treatment of waste water of industrial and domestic origin, for drinking water preparation and for sludge treatment as a pulverised produce, granulate or shaped solids.

**Revendications**

**1.** Procédé de fabrication d'un produit composite solide pour le traitement des eaux à base de farine de roche contenant des zéolites, caractérisé par le fait que l'on fait réagir la farine de roche avec du polychlorure d'aluminium, éventuellement partiellement hydrolysé, à une température comprise entre 100 °C et 600 °C.

**2.** Procédé selon la revendication 1, caractérisé par le fait que le rapport Si/Al de la zéolite a une valeur supérieure à 3.

**3.** Procédé selon la revendication 1, caractérisé par le fait que le composant zéolite dans la roche a une structure de type clinoptilolite.

**4.** Procédé selon la revendication 1, caractérisé par le fait que la teneur en zéolites de la roche est comprise entre 40 et 95 % en poids.

**5.** Procédé selon la revendication 1, caractérisé par le fait que l'on utilise la farine de roche et le polychlorure d'aluminium éventuellement partiellement hydrolysé en un rapport pondéral compris entre 1/0,01 et 1/2, de préférence égal à environ 1/1.

**6.** Procédé selon l'une des revendications précédentes, caractérisé par le fait que l'on convertît la zéolite au moins partiellement en sa forme protonée avant de la faire réagir avec le polychlorure d'aluminium éventuellement partiellement hydrolysé.

**7.** Procédé selon une des revendications précédentes, caractérisé par le fait que la farine de roche est utilisée sous forme d'une poudre ayant une taille de particules inférieure ou égale à 250 µm.

**8.** Procédé selon l'une des revendications 1 à 6, caractérisé par le fait que la farine de roche est utilisée sous forme de granulés ayant une taille de particules comprise entre 0,2 et 100 mm.

**9.** Procédé selon l'une des revendications 1 à 6, caractérisé par le fait que l'on utilise la farine de roche sous forme d'un corps moulé.

10. Procédé selon l'une des revendications précédentes, caractérisé par le fait que l'on fait réagir un mélange contenant une zéolite au moins partiellement protonée, du polychlorure d'aluminium éventuellement partiellement hydrolysé et de l'eau à une température comprise entre 150 et 250 °C, en évaporant l'eau, la température étant régulée de manière à ce que le produit composite solide formé ne soit pas chauffé à une température supérieure à 100 °C.

11. Procédé selon la revendication 10, caractérisé par le fait que le produit composite solide contient moins de 10 % en poids d'humidité.

12. Procédé selon la revendication 10 ou 11, caractérisé par le fait que la réaction se fait dans une tour à pulvérisation alimentée par le dessus avec la zéolite au moins partiellement protonée, le polychlorure d'aluminium éventuellement partiellement hydrolysé et de l'eau, dans un courant d'air à une température comprise entre 150 et 250 °C.

13. Procédé selon une des revendications 1 à 9, caractérisé par le fait que l'on fait sécher un mélange contenant une zéolite au moins partiellement protonée, du polychlorure d'aluminium éventuellement partiellement hydrolysé et de l'eau à une température inférieure à 100 °C et que l'on chauffe ensuite le mélange à une température comprise entre 250 et 600 °C.

14. Procédé selon la revendication 13, caractérisé par le fait que le séchage se fait sous vide.

15. Utilisation du produit fabriqué selon l'une quelconque des revendications précédentes pour le traitement d'eaux résiduaires provenant de l'industrie ou des communes, pour le traitement d'eau potable et pour le traitement de boues, sous forme de poudre, de granulés ou de corps moulés.

150 - 200°

100 - 120°

80 - 90°